# EUROPÄISCHE PATENTSCHRIFT

(11) **EP 2 227 051 B1**
(45) Veröffentlichungstag und Bekanntmachung des Hinweises auf die Patenterteilung: **25.05.2011**
(21) Anmeldenummer: 09154403.1
(22) Anmeldetag: 05.03.2009
(51) Int. Cl.: H04W 24/04, H04W 8/00

(54) **Verfahren zur Identifizierung der vom Ausfall einer Basisstation eines Mobilfunknetzes betroffenen Mobilstationen und zur Kompensation der dadurch entstandenen Versorgungslücke**
Method for identifying the mobile stations affected by the failure of a base station on a mobile radio network and compensating for the resulting supply shortfall
Procédé destiné à l'identification des stations mobiles atteintes d'une panne de la station de base d'un réseau radio mobile et à la compensation des manques d'entretien survenant en conséquence

(43) Veröffentlichungstag der Anmeldung: 08.09.2010
(73) Patentinhaber: Deutsche Telekom AG, 53113 Bonn (DE)
(72) Erfinder: Belschner, Jakob, 65934 Frankfurt/M (DE); Arnold, Paul, 61231 Bad Nauheim (DE)
(74) Vertreter: Vossius & Partner

(56) Entgegenhaltungen:
- EP-A- 1 209 886
- WO-A-2006/086906
- WO-A-2008/030171

## Beschreibung

### Gebiet der Erfindung

Die vorliegende Erfindung betrifft ein Verfahren zur Identifizierung der vom Ausfall einer Basisstation eines Mobilfunknetzes betroffenen Mobilstationen und ein Verfahren zur Kompensation der dadurch entstandenen Versorgungslücke.

### Hintergrund der Erfindung

In Mobilfunkzugangsnetzen besteht im Allgemeinen das Problem, dass verschiedene Einflüsse zu einem Ausfall einer Mobilfunk-Basisstation (BS) führen können. Solche Einflüsse können aus verschiedenen Gründen entstehen, gängige Ursachen sind Hard-und Softwarefehler, z.B. der Defekt eines Antennenverstärkers, und äußere Umwelteinflüsse, z.B. Blitzeinschlag.

Wenn eine Mobilstation (MS), welche durch eine ausgefallene BS mit dem Mobilfunknetz verbunden war, nach dem Ausfall keine anderen BS zur erneuten Anbindung an das Netz nutzen kann, bedeutet dies, dass ein nicht mehr abgedeckter Versorgungsbereich entstanden ist. Das heißt, dass umliegende BS in diesem Bereich keine oder nur eine zu geringe Empfangsleistung bereitstellen.

Um einen BS-Ausfall zu beheben, wird versucht, die notwendigen Reparaturmaßnahmen, beispielsweise den Austausch eines Antennenverstärkers, so schnell wie möglich durchzuführen. Es kann allerdings der Fall sein, dass diese Reparaturmaßnahmen längere Zeit, etwa Tage oder auch Wochen in Anspruch nehmen. In diesem Fall wird versucht, den durch den BS-Ausfall nicht mehr vom Mobilfunknetz abgedeckten Bereich durch Kompensationsmaßnahmen kurzfristig zu verkleinern oder die Versorgungslücke gar komplett zu schließen. Maßnahmen, BS-Ausfällen entgegen zu wirken, werden nach dem aktuellen Stand der Technik typischerweise manuell ergriffen (siehe, zum Beispiel, das EU Förderprojekt Self-Optimisation & Self-Configuration in wireless networks (SOCRATES)). Eine mögliche Maßnahme zur Kompensation ist, die Sendeleistung umliegender BS manuell zu erhöhen und durch anschließende Testfahrten zu überprüfen, ob die entstandene Versorgungslücke geschlossen und durch umliegende BS wieder abgedeckt wurde. Diese manuellen Maßnahmen bringen allerdings einen hohen Personal- und damit Kostenaufwand mit sich. Des Weiteren werden manuelle Kompensationsmaßnahmen nicht optimal an die jeweilige Situation angepasst sondern nur nach groben Abschätzungen durchgeführt.

Mechanismen zur automatischen Kompensation von BS-Ausfällen, sogenanntes selfhealing oder cell outage compensation, sind im Moment Gegenstand der Forschung (siehe, zum Beispiel, das EU Förderprojekt Self-Optimisation & Self-Configuration in wireless networks (SOCRATES) und IEEE 802.16 Broadband Wireless Access Working Group: Self-configuration and self-optimization of 4G Radio Access Networks, 2007-08-29).

WO 2006/086906 betrifft ein Verfahren und System zur drahtlosen Untertage-Datenübertragung zwischen wenigsten einer Mobilstation und einem stationären Netzwerk über ein Funknetzwerk. Das darin beschriebene Verfahren sieht u.a. die Übertragung von Indentifikations- oder Posititionsdaten aller Mobilstationen vor, um im Falle eines Problems einen umfassenden Überblick über den Standort aller Mobilstationen zu erhalten (siehe Seite 11, Zeilen 28 bis 33 und Seite 13, Zeilen 1 bis 4). Diese Daten sollen vorzugsweise an einem Zentralrechner des stationären Netzwerks übertragen werden. Ferner ist in der WO 2006/086906 die Übermittlung von Daten zwischen benachbarten Basisstationen vorgesehen, um den Verbindungszustand zu dem stationären Netzwerk zu ermitteln und im Falle eines Ausfalls einzelner Basisstationen oder von Teilen des stationären Netzwerks einen alternativen Zugang zum stationären Netzwerk bereitstellen zu können.

Die WO 2008/030171 betrifft einen Netzwerk-Rekonfigurator. Dieser ermittelt zentral für die ihm zugeordneten Basisstationen verschiedenen Typs Alternativkonfigurationen. Im Falle eines Ausfalls einer Basisstation modifiziert dieser die Funkcharakteristiken der verbleibenden Basisstationen.

### Zusammenfassung der Erfindung

Der Erfindung liegt die Aufgabe zugrunde, ein Verfahren zur Identifizierung der vom Ausfall einer Basisstation eines Mobilfunknetzes betroffenen Mobilstationen und ein Verfahren zur Kompensation der durch den Ausfall der Basisstation entstandenen Versorgungslücke, bereitzustellen.

Diese Aufgabe wird anhand des Gegenstandes gemäß der vorliegenden Patentansprüche gelöst.

Somit ist es zum Beispiel möglich, nach Ausfall einer Basisstation eines Mobilfunknetzes, einen automatisch optimierenden Selbstheilungsprozess einzuführen, der auf einen erkannten BS-Ausfall reagiert und sowohl Kosten für manuelle Kompensation einspart als auch ein besseres Kompensationsergebnis erreicht.

Die Erfindung betrifft ein Verfahren zur Identifizierung der vom Ausfall einer Basisstation (BS) eines Mobilfunknetzes betroffenen Mobilstationen, wobei vor dem Ausfall, für jede Basisstation des Mobilfunknetzes, eine Liste mit der jeweiligen Basisstation verbundenen Mobilstationen und mit der jeweiligen Basisstation benachbarten Basisstationen bestimmt und gespeichert wird. Nach dem der Ausfall der Basisstation (BS) erkannt wird, zum Beispiel durch eine Ausfallerkennung gemäß dem Stand der Technik, werden die folgenden Schritte ausgeführt:
a. Auswertung gespeicherter Listen der Basisstationen des Mobilfunknetzes zur Bestimmung der mit der ausgefallenen Basisstation (BS) benachbarten Basisstationen;
b. Auswertung gespeicherter Listen der Basisstationen des Mobilfunknetzes zur Identifizierung der Mobilstationen, die vor dem Ausfall der Basisstation (BS) mit dieser verbunden waren und nach dem Ausfall der Basisstation (BS) mit keiner der Basisstationen verbunden sind, die zu der ausgefallenen Basisstation (BS) benachbart sind.

In einer Ausführungsform der vorliegenden Erfindung werden die Listen der Basisstationen jeweils von derselben Basisstation bestimmt und lokal gespeichert. Somit wird von jeder Basisstation im Mobilfunknetz, das vorzugsweise nach dem Mobilfunkstandard Long Term Evolution (LTE) arbeitet, eine Liste mit den ihr verbundenen Mobilstationen und den ihr benachbarten Basisstationen bestimmt und lokal in einem eigenen Speichermedium gespeichert. Erfindungsgemäß weist jede der Basisstationen eine Softwarekomponente auf, wobei die Softwarekomponenten vorzugsweise die Bestimmung und lokale Speicherung der Liste der ihr zugehörigen Basisstation durchführt. Ferner wird eine Kopie einer Liste einer ersten Basisstation von deren Softwarekomponente über ein Datennetzwerk zu einer Softwarekomponente einer zweiten Basisstation übertragen, wobei das Datennetzwerk zum Beispiel im Backbone des Mobilfunknetzes aufgebaut werden kann. Die Softwarekomponente der zweiten Basisstation speichert die empfangene Liste der ersten Basisstation in einem lokalen Speichermedium der zweiten Basisstation. Es wird eine Kopie der Liste einer Basisstation von den Softwarekomponenten aller dieser Basisstation benachbarten Basisstationen jeweils lokal gespeichert. Hierzu werden vorzugsweise die entsprechenden Listen der Basisstationen in regelmäßigen Abständen aktualisiert und neu übertragen. Es wird somit bevorzugt, dass die Listen der Basisstationen vor dem Ausfall der Basisstation (BS) in regelmäßigen Abständen aktualisiert werden, zum Beispiel etwa im Minutentakt.

Erfindungsgemäß wird von einer Ausfallerkennungsnetzkomponente, nach Ausfall der Basisstation (BS), ein Kompensationsnetzwerk mit der ausgefallenen Basisstation benachbaren Basisstationen aufgebaut. Vorzugsweise wird die Auswertung einer der gespeicherten Listen nach Schritt a und b, von der Softwarekomponente einer ausgewählten im Kompensationsnetz aufgenommenen Basisstation durchgeführt.

Alternativ wird für die zweite Ausführungsform bevorzugt, dass nach Ausfall der Basisstation (BS) die Ausfallerkennungsnetzkomponente eine Verbindung mit einer Softwarekomponente einer ausgewählten, der ausgefallenen Basisstation benachbarten, Basisstation aufbaut und diese darüber informiert, welche der Basisstationen des Mobilfunknetzes ausgefallen ist, wobei die ausgewählte Basisstation die erste in einem Kompensationsnetzwerk aufgenommene Basisstation darstellt. Es wird ferner bevorzugt, dass diese und die späteren im Kompensationsnetzwerk aufgenommenen Basisstationen, ihre lokal gespeicherten Kopien der Liste der der ausgefallenen Basisstation benachbarten Basisstationen benutzen, um weitere der ausgefallenen Basisstation benachbarten Basisstationen in das Kompensationsnetzwerk aufzunehmen und diese darüber zu informieren, welche der Basisstationen des Mobilfunknetzes ausgefallen ist.

Die Erfindung betrifft ferner ein Kompensationsverfahren zur Kompensation des Ausfalls der Basisstation (BS) des Mobilfunknetzes, wobei mindestens eine Mobilstation als eine vom Ausfall der Basisstation (BS) betroffene Mobilstation identifiziert worden ist, mit den Schritten:
A. Auswahl mindestens einer Kompensationsbasisstation, die eine der Basisstationen des Kompensationsnetzwerkes ist;
B. Ermittlung des aktuellen Zustands des Kompensationsnetzwerkes;
C. Änderung der Eigenschaften der mindestens einen Kompensationsbasisstation;
D. Ermittlung des aktuellen Zustands des Kompensationsnetzwerkes;
E. Vergleich des Zustands des Kompensationsnetzwerkes mit und ohne der Änderung der Eigenschaften der mindestens einen Kompensationsbasisstation und Beibehalten der Änderung wenn ein Vergleichskriterium erfüllt ist;
F. Wiederholung der Schritte A bis E oder C bis E des Kompensationsverfahrens, bis das Kompensationsnetzwerk ein Abbruchkriterium erfüllt.

Bevorzugt werden die Schritte A bis F des Kompensationsverfahrens von einer Koordinationsbasisstation, die eine der Basisstationen des Kompensations-netzwerkes ist, koordiniert.

Es wird ferner bevorzugt, dass die Auswahl der mindestens einen Kompensationsbasisstation auf dem Zufallsprinzip beruht oder von vorkonfigurierten Listen abhängig ist.

Die Ermittlung des aktuellen Zustands des Kompensationsnetzwerkes weist vorzugsweise die Identifizierung der vom Ausfall einer Basisstation (BS) eines Mobilfunknetzes betroffenen mindestens einen Mobilstation auf.

Ferner ist das Abbruchkriterium im Schritt F vorzugsweise erfüllt, wenn keine vom Ausfall der Basisstation (BS) betroffene Mobilstation identifiziert wird.

Es wird auch bevorzugt, dass die Ermittlung des aktuellen Zustands des Kompensationsnetzes eine Auswertung der Empfangsverhältnisse der mit den Basisstationen des Kompensationsnetzes verbundenen Mobilstationen aufweist.

Die Änderung der Eigenschaften der mindestens einen Kompensationsbasisstation, weist vorzugsweise eine Änderung der Sendeleistung oder eine Änderung der Antennen-Tilts auf. Es wird ferner bevorzugt, dass die Änderung der Eigenschaften der mindestens einen Kompensationsbasisstation schrittweise erfolgt.

Das Vergleichskriterium, zum Vergleich des Zustands des Kompensationsnetzwerkes mit und ohne die Änderung der Eigenschaften der mindestens einen Kompensationsbasisstation, kann vorzugsweise die Änderung der Anzahl der vom Ausfall der Basisstation (BS) betroffenen Mobilstationen oder die Verschlechterung der Empfangsverhältnisse der nicht vom Ausfall des Basisstation (BS) betroffenen Mobilstationen berücksichtigen.

Es wird auch bevorzugt, dass das Vergleichskriterium, zum Vergleich des Zustands des Kompensationsnetzwerkes mit und ohne der Änderung der Eigenschaften der mindestens einen Kompensationsbasisstation, durch die Ermittlung eines einzigen Zahlenwertes bewertet wird, wobei der ermittelte Zahlenwert und das Vergleichskriterium vorzugsweise die Auswirkung der Änderung der Eigenschaften der mindestens einen Kompensationsbasisstation auf ein Gütemaß bewertet. Das Gütemaß bewertet den Zustand des Kompensationsnetzwerkes und wird vom Kompensationsverfahren maximiert, beispielsweise indem, dass bei Feststellung keiner positiven Auswirkung auf das Gütemaß, das Abbruchkriterium im Schritt F des Kompensationsverfahrens als erfüllt betrachtet wird.

### Kurzbeschreibung der Zeichnungen

Vorteilhafte Ausführungsformen der Erfindung werden beispielhaft in den Figuren dargestellt. Es zeigen:
Fig. 1 den Aufbau eines Mobilfunknetzes mit einer Mobilstation
Fig. 2 den Aufbau eines Mobilfunknetzes mit mehreren Mobilstationen

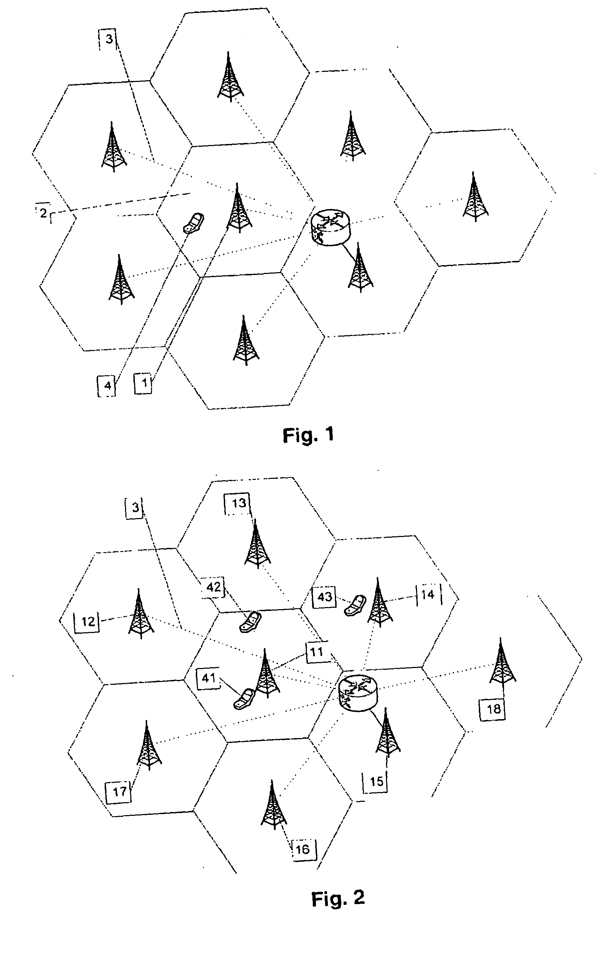

Fig. 1 zeigt den prinzipiellen Aufbau eines zellularen Mobilfunknetz mit mehreren Basisstationen (BS) 1, die von Basisstationen abgedeckten Zellen 2, breitbandige Kommunikationsverbindungen 3, die das sogenannte Backbone zwischen den BS bilden (beispielsweise Kabel- oder Richtfunkverbindungen) und eine Mobilstation (MS) 4 die sich in der Zelle 2 befindet.

Fällt nun eine BS des Netzes ganz oder teilweise aus, sind beispielsweise für eine erfindungsgemäße automatische Kompensation Informationen darüber erforderlich, welche MS von diesem Ausfall betroffen sind und welche BS zur Kompensation eingesetzt werden können. Sobald diese Informationen vorliegen, kann die automatische Kompensation begonnen werden.

In einem Ausführungsbeispiel der vorliegenden Erfindung wird davon ausgegangen, dass während des Betriebs eines Mobilfunknetzes die folgenden Informationen vorliegen:
- Identifikationsnummern (IDs) der MS, über die eine aktive Datenverbindung besteht (im Folgenden als aktive MS bezeichnet)
- Für jede aktive MS die ID der BS, über die die Datenverbindung besteht (der Begriff Datenverbindung schließt in diesem Kontext auch ein Telefongespräch mit ein).
- Für jede BS eine Liste mit IDs der benachbarten BS, die sogenannte Nachbarschaftsliste bzw. Neighbour Cell List (NCL)

An welcher Stelle diese Informationen vorliegen, ist von der eingesetzten Netzwerktechnologie abhängig. Beispielsweise liegen in Netzen nach dem Mobilfunkstandard Long Term Evolution (LTE) die Informationen in jeder BS separat vor. D.h. in jeder BS sind die IDs der aktiven MS dieser BS vorhanden, nicht aber die IDs der aktiven MS anderer BS. Gleichzeitig ist in jeder BS eine NCL mit den IDs der benachbarten BS hinteriegt. Anderseits können die gleichen Informationen in gebündelter Form in einer übergeordneten Netzkomponente im Mobilfunknetz vorliegen, wie zum Beispiel in dem Radio Network Controller (RNC) eines UMTS oder dem Base Station Controller (BSC) eines GSM Netzes. In einem RNC/BSC, dem mehrere BS zugeordnet sind, liegen folgende Informationen vor:
- IDs aller aktiven MS eines RNC/BSC
- NCL aller BS eines RNC/BSC

Zusammenfassend können also die erwähnten Informationen in Mobilfunknetzen nach dem LTE Standard verteilt auf die BS vorliegen, während sie in Netzen nach dem GSM Standard im BSC und nach dem UMTS Standard im RNC in gebündelter Form vorliegen. Für die vorliegende Erfindung benötigen verteilt vorliegende Informationen ein komplexeres Vorgehen, weshalb dieses im Folgenden beschrieben wird, wobei die erfindungsgemäßen Verfahren natürlich auch für Netze mit RNC oder BSC anwendbar sind.

Eine Softwarekomponente dient in diesem Ausführungsbeispiel der vorliegenden Erfindung zur automatischen Kompensation eines BS-Ausfalls, wobei die Softwarekomponente in jede BS des gesamten Mobilfunknetzes integriert wird. Diese Softwarekomponente übernimmt sowohl die Beschaffung der zur Kompensation benötigten Informationen, als auch, im Falle eines Ausfalls, die Kompensation selbst.

Im Falle eines Ausfalls muss zunächst ermittelt werden, welchen Effekt dieser auf die Funkfeldversorgung der MS hat. Dazu wird eine Liste aller MS benötigt, die vor dem Ausfall über die ausgefallene BS mit dem Mobilfunknetz verbunden waren. Es muss damit gerechnet werden, dass im Falle eines Ausfalls keinerlei Kommunikation mit der betroffenen BS mehr möglich ist.

Das erfindungsgemäße folgende Verfahren ermöglicht die Identifizierung der betroffenen MS im Falle eines Ausfalls, zur Bereitstellung der entsprechenden Liste:
1. Die in jede BS integrierte Softwarekomponente liest zunächst die NCL der BS in der sie arbeitet, ein und erhält somit die IDs aller Nachbar-BS dieser BS.
2. Die lokale Softwarekomponente einer BS baut nun über das Backbone eine Verbindung zur entfernten Softwarekomponente in allen Nachbar-BS auf.
3. Über die aufgebaute Verbindung fragt die lokale Softwarekomponente von jeder entfernten BS der lokalen NCL folgende Daten ab:
   - IDs der mit der entfernten BS verbundenen MS
   - Die NCL der entfernten BS, d.h. die entfernte NCL
4. Nach Ablauf der Punkte 1-3 liegt somit in der lokalen Softwarekomponente jeder BS eine Liste mit den IDs der MS vor, die mit den benachbarten BS verbunden sind, inklusive der ID der entfernten BS mit der diese MS verbunden sind. Weiterhin liegen in der lokalen Softwarekomponente auch die NCL der entfernten BS vor.
5. Um die Aktualität der Liste sicherzustellen werden die Punkte 1 - 3 in regelmäßigen Abständen (etwa im Minutentakt) wiederholt. Durch die relativ geringen Datenmengen (nur die IDs der BS und MS werden übertragen) ist der entstehende zusätzliche Datenverkehr tolerierbar.
6. Im Falle eines Ausfalls wird von einer Netzkomponente zur Ausfallerkennung eine Verbindung zur Softwarekomponente in mindestens einer Nachbar-BS der aufgefallen BS aufgebaut und die Information übertragen, welche BS (eindeutig identifizierbar anhand der ID) ausgefallen ist.
7. Jede Softwarekomponente, die die Information über den Ausfall einer BS erhalten hat, lädt nun die NCL der ausgefallenen BS. Aufgrund des Vorgehens in den Punkten 1 - 3 ist diese in allen Nachbar-BS der betroffenen BS verfügbar. Anschließend baut jede Softwarekomponente, die über den Ausfall informiert wurde, eine Verbindung zu jeder Softwarekomponente der BS in der NCL der ausgefallenen BS auf.
8. Mit Abschluss von Punkt 7 ist ein Netzwerk zwischen allen Nachbar-BS der ausgefallenen BS entstanden. Über dieses Netzwerk, im folgenden Kompensationsnetzwerk genannt, kann zunächst an jede Softwarekomponente in jeder BS die Information übertragen werden, dass ein Ausfall einer BS eingetreten ist und um welche BS es sich handelt. Die Koordination im Kompensationsnetzwerk übernimmt beispielsweise die Softwarekomponente der BS dieses Netzwerks mit der niedrigsten ID.
9. Die koordinierende Softwarekomponente beginnt mit einer Analyse, welche MS sich nach dem Ausfall in einem Bereich ohne Funkfeldversorgung befinden. Dazu wird zunächst die Liste der IDs der MS, die vor dem Ausfall mit der mittlerweise ausgefallenen BS verbunden waren, geladen (diese Liste steht aufgrund des Vorgehens in den Punkten 1 - 3 zur Verfügung). Für jede einzelne MS muss nun geprüft werden, ob sie sich in einer Versorgungslücke befindet oder durch eine benachbarte BS weiterhin versorgt wird. Zu diesem Zwecke fragt die koordinierende Softwarekomponente über das entstandene Netzwerk die IDs aller MS ab, die mit den benachbarten BS der aufgefallenen BS verbunden sind. Durch einen Abgleich der IDs von mit den benachbarten BS verbundenen MS und MS, die vor dem Ausfall mit der mittlerweile ausgefallenen BS verbunden waren, lässt sich die benötigte Liste der nach einem Ausfall nicht mehr versorgten MS erstellen.
   Es wird darauf hingewiesen, dass sich das im Ausführungsbeispiel beschriebene Verfahren nur auf Mobilstationen bezieht, für die vor dem Ausfall eine aktive Datenverbindung bestand. Dies hat zur Ursache, dass nur für diese MS im Mobilfunknetz die Information vorliegt, mit welcher BS die jeweilige MS verbunden ist. Für MS ohne Datenverbindung (beispielsweise für Mobilstationen im sogenannten idle mode) liegt nur die Information vor, in welchem Gebiet (sogenannte location area) sie sich befinden. Es ist aber möglich, auch jeder MS im idle mode eine BS zuzuordnen, was allerdings zu erhöhtem Datenverkehr im Mobilfunknetz führt.
   Nach Abschluss der Identifizierung der betroffenen MS im Falle eines Ausfalls, kann ein Kompensationsverfahren, zur Kompensation des Ausfalls der Basisstation (BS) des Mobilfunknetzes, auf Basis der gewonnenen Informationen durchgeführt werden. Dieses Verfahren kann unmittelbar nach Abschluss der Ermittlung der von einem BS-Ausfall betroffenen MS angewandt werden. So kann zum Beispiel eine automatische Kompensation der nach einem Basisstationsausfall entstandenen Versorgungslücke erfolgen. Es verwendet die in Punkt 9 ermittelten Informationen und setzt auch auf das in Punkt 7 entstandene Kompensationsnetzwerk auf. Die Nummerierung einzelnen Schritte wird daher fortgesetzt.
10. Zunächst wird eine Analyse der in Punkt 9 ermittelten Daten vorgenommen. Sofern alle von einem BS-Ausfall betroffenen MS ohne Kompensationsmaßnahmen wieder eine Verbindung zum Mobilfunknetz herstellen konnten, ist keine Kompensation erforderlich. Dies kann beispielsweise in einem städtischen Gebiet mit einer hohen räumlichen Dichte an BS der Fall sein. In ländlichen Gebieten mit geringerer Dichte ist dagegen zu erwarten, dass bei einem BS-Ausfall eine Versorgungslücke entstanden ist. Im Folgenden wird das weitere Vorgehen für den Fall, dass eine oder mehrere MS nach dem BS-Ausfall keine ausreichende Funkfeldversorgung mehr erhalten, beschrieben.
11. Die Koordination der Kompensationsmaßnahmen übernimmt wiederum die in Punkt 8 ausgewählte Softwarekomponente der BS. Die Softwarekomponente wählt zunächst aus dem in Punkt 7 entstandenen Kommunikationsnetz eine Anzahl von BS aus, die zur Kompensation herangezogen werden sollen. Das Auswahlverfahren hängt hierbei von der Ausführungsform ab. Beispiele für mögliche Ausführungsformen sind:
   - Vorkonfigurierte Listen, die Informationen enthalten, welche BS (z.B. aufgrund von räumlicher Nähe) besonders wirkungsvoll zur Kompensation eines bestimmten Bereichs eingesetzt werden können
   - Zufällige Auswahl mehrerer BS
12. Der aktuelle Zustand des Kompensationsnetzwerks wird von der koordinierenden Softwarekomponente im Kompensationsnetzwerk abgefragt und festgehalten. Der Zustand umfasst:
   - Die unter Punkt 9 erstellte Liste der vom BS-Ausfall betroffenen MS
   - Die Empfangsverhältnisse, beispielsweise ausgedrückt durch das Signal zu Interferenz und Rauschverhältnis (signal to interference and noise ratio, SINR), aller MS die mit einer BS des Kompensationsnetzwerks verbunden sind.
13. An den ausgewählten BS werden Kompensationsmaßnahmen begonnen. Diese können sein:
   - Erhöhung der Sendleistung
   - Veränderung des Antennen-Tilts
   Die Kompensation erfolgt schrittweise in diesem Ausführungsbeispiel, d.h. die Sendleistung wird z.B. zunächst um 10% erhöht, im nächsten Schritt um weitere 10%.
14. Nach jedem Schritt wird nach dem in Punkt 12 beschriebenen Verfahren der aktuelle Zustand des Netzwerks ermittelt und bewertet. Dies umfasst auch die Aktualisierung der in Punkt erstellten Liste der vom BS-Ausfall betroffenen MS. Die Bewertung umfasst positive Effekte (z. B. die Verringerung der Anzahl der vom Ausfall betroffenen MS) und negative Effekte (z. B. die Verschlechterung der Empfangsverhältnisse der nicht vom Ausfall betroffenen MS durch gestiegene Interferenz, im Extremfall kann daraus auch der Verbindungsverlust von ursprünglich nicht betroffenen MS resultieren). Die Bewertung wird durch die Ermittlung eines einzigen Zahlenwerts abgeschlossen, der Auskunft darüber gibt, ob der durchgeführte Kompensationsschritt insgesamt positiv war oder nicht. Die genaue Berechungsvorschrift hängt von der Ausführungsform ab.
15. Im Falle eines positiven oder neutralen Bewertungsergebnisses wird die begonnene Kompensation fortgesetzt (Sprung zu Punkt 13). Im Falle eines negativen Bewertungsergebnisses wird der letzte Kompensationsschritt rückgängig gemacht. Eventuell vorher durchgeführte Kompensationsschritte mit positivem Ergebnis werden aber beibehalten.
16. Nachdem ein Kompensationsschritt erstmals negative Auswirkungen hatte und rückgängig gemacht wurde, ergeben sich, zum Beispiel, zwei Ausführungsformen:
   a. Beibehaltung der begonnenen Kompensationsschritte. Danach je nach Ausführungsform Beendigung der Kompensationsmaßnahmen oder zusätzliche weitere Kompensationsmaßnahem durch andere BS, d.h. Sprung zu Punkt 11 und Auswahl anderer BS als der zuvor gewählten zur Kompensation.
   b. Abspeichern der durchgeführten Kompensationsmaßnahmen inklusive der erreichten Verbesserungen durch die koordinierende Softwarekomponente, danach:
      - vollständige Rückgängigmachung aller Kompensationsmaßnahmen, Sprung zu Punkt 11 unter Auswahl anderer BS zur Kompensation
      - Fortsetzung bis wiederum Punkt 16b erreicht wird.
      - Wiederum Abspeichern und Sprung zu Punkt 11, bis alle möglichen Kompensationsmaßnahmen ausgeführt und bewertet wurden.
      - Umsetzung der Kompensationsmaßnahmen mit der besten Bewertung.

Fig. 2 zeigt das aus Fig. 1 bekannte Mobilfunknetz, allerdings mit 3 Mobilstationen. In diesem Beispiel entsprechen die NCL der einzelnen BS der räumlichen Nachbarschaft. D.h die NCL von BS 11 z.B. enthält die BS 12 bis 17, die NCL von BS 18 die BS 14 und-15.

Im Folgenden werden die aus dem vorherigen Abschnitt bekannten Einzelschritte an einem Ausführungsbeispiel erläutert.
1. Die in BS 12 arbeitende Softwarekomponente liest die NCL von BS 12 ein. Die NCL enthält folgende BS: 11, 13, 17. Der gleiche Vorgang findet in allen anderen BS statt.
2. Die Softwarekomponente in BS 12 baut über das Backbone 3 eine Verbindung zu der Softwarekomponente in BS 11, 13 und 17 auf. Der gleiche Vorgang findet in allen anderen BS statt.
3. Über die aufgebaute Verbindung liest die Softwarekomponente in BS 12 folgende Informationen:
   - IDs der mit BS 11 verbundenen MS (41, 42)
   - IDs der mit BS 13 verbundenen MS (keine)
   - IDs der mit BS 17 verbundenen MS (keine)
   - NCL von BS 13 (BS 11, 12, 14)
   - NCL von BS 11 (BS 12 - 17)
   - NCL von BS 17 (BS 11, 12, 16)
      Der gleiche Vorgang findet in allen anderen BS statt.
4. In BS 12 liegen nun die sowohl die NCL aller Nachbar-BS als auch die Liste aller mit den Nachbar-BS verbundenen MS vor.
5. Vorgang in 1 - 3 wird regelmäßig wiederholt, um die gewonnenen Daten aktuell zu halten. Dies hat im vorliegenden Beispiel keine Auswirkungen, da angenommen wird, dass die MS stationär sind.
   An dieser Stelle wird ein Ausfall von BS 11 angenommen. Es wird weiterhin angenommen, dass MS 41 und 42 dadurch zunächst die Mobilfunkverbindung verlieren. Im Gegensatz zu MS 41 ist MS 42 anschließend in der Lage, aufgrund der räumlichen Nähe eine Verbindung zu BS 13 aufzubauen. MS 43 ist vom Ausfall nicht betroffen.
6. Die Netzkomponente zur Ausfallerkennung erkennt den Ausfall von BS 11 und meldet dies in diesem Beispiel an die Softwarekomponente in BS 12.
7. Die Softwarekomponente in BS 12 lädt nun die zuvor ermittelte NCL von BS 11. Anschließend wird von der Softwarekomponente in BS 12 eine Verbindung zu allen BS in der NCL von BS 11, d.h. zu Softwarekomponenten der BS 13-17, aufgebaut.
8. Mit Abschluss von Punkt 7 hat sich das Kompensationsnetzwerk gebildet. Es besteht aus den BS 12 - 17. Aufgrund ihrer niedrigsten ID übernimmt die Softwarekomponente in BS 12 die Koordination des Netzwerks und informiert die Softwarekomponenten in allen anderen BS des Kompensationsnetzes über den Ausfall von BS 11.
9. Die Softwarekomponente von BS 12 beginnt mit einer Analyse der Ausfallauswirkungen. Dazu wird zunächst abgefragt, welche MS mit dem Kompensationsnetzwerk verbunden sind (Ergebnis: MS 42 und 43). Dies wird mit der Liste der vor dem Ausfall mit BS 11 verbundenen MS (41 und 42) abgeglichen. Ergebnis: MS 41 verfügt seit dem Ausfall über keine Funknetzversorgung mehr.
10. Da festgestellt wurde, dass MS 41 nicht mehr versorgt wird, muss mit Kompensationsmaßnahmen begonnen werden.
11. In diesem Beispiel wird angenommen, dass die zur Kompensation genutzten BS zufällig ausgewählt werden und zunächst BS 15 zur Kompensation gewählt wird.
12. Die Softwarekomponente in BS 12 analysiert den Zustand des Kompensationsnetzwerks. Ergebnis: MS 41 hat keine Verbindung, MS 43 ist mit BS 14 verbunden (angenommenes SINR: 20dB), MS 42 ist mit BS 13 verbunden (angenommenes SINR: 5dB)
13. Die Softwarekomponente in BS 12 koordiniert die Kompensation und veranlasst BS 15, die Sendeleistung um 10% zu erhöhen.
14. Erneute Analyse des Zustands des Kompensationsnetzwerks. Angenommenes Ergebnis: Keine Veränderungen.
15. Daher werden die Kompensationsmaßnahen fortgesetzt:
   - BS 15 erhöht Sendeleistung erneut um 10%.
   - Angenommenes Ergebnis: MS 41 weiterhin keine Versorgung, MS 43: Aufgrund von erhöhter Interferenz durch BS 15 nur noch 19dB SINR, MS 42: weiterhin 5dB SINR.
16. Die Gesamtbewertung der durchgeführten Kompensationsmaßnahmen ist negativ (aufgrund der Tatsache, dass keine Verbesserungen erzielt werden konnten, während MS 43 eine verschlechterte Versorgung erhält). Die koordinierende Softwarekomponente veranlasst BS 15 nun, die Sendeleistung wieder auf den Wert vor der Kompensation zurückzufahren. Anschließend werden andere Kompensationsmaßnahmen analysiert, d.h. beispielsweise: BS 13 erhöht nun schrittweise die Sendeleistung, das erzielbare Ergebnis wird ermittelt, danach erhöht BS 14 die Sendeleistung, usw. In diesem Beispiel wird angenommen, dass eine Erhöhung der Sendeleistung von BS 17 die Versorgung von MS 41 wieder herstellen kann, während die Interferenz für MS 42 und 43 nur wenig erhöht wird. Kompensationsmaßnahmen mittels anderer BS werden als nicht erfolgreich angenommen. Nachdem also die Auswirkungen der Erhöhungen der Sendeleistung jeder einzelnen BS getestet wurde, ergibt sich als Endergebnis, dass eine Kompensation über eine Erhöhung der Sendeleistung von BS 17 sinnvoll ist. Diese wird damit beibehalten.

Folgende Anteile des Ausführungsbeispiels sind von der Ausführungsform abhängig und wurden in diesem Ausführungsbeispiel sehr einfach gewählt:
- Auswahl der zur Kompensation benutzten BS
- Auswahl der Kompensationsmaßnahme
- Bewertung der Kompensationsergebnisse

## Patentansprüche

1. Verfahren zur Identifizierung der vom Ausfall einer Basisstation (BS) eines Mobilfunknetzes betroffenen Mobilstationen, wobei vor dem Ausfall, für jede Basisstation des Mobilfunknetzes, eine Liste mit der jeweiligen Basisstation verbundenen Mobilstationen und mit der jeweiligen Basisstation benachbarten Basisstationen bestimmt und gespeichert wird; mit den Schritten nach dem Ausfall der Basisstation (BS):
a. Auswertung gespeicherter Listen der Basisstationen des Mobilfunknetzes zur Bestimmung der mit der ausgefallenen Basisstation (BS) benachbarten Basisstationen;
b. Auswertung gespeicherter Listen der Basisstationen des Mobilfunknetzes zur Identifizierung der Mobilstationen, die vor dem Ausfall der Basisstation (BS) mit dieser verbunden waren und nach dem Ausfall der Basisstation (BS) mit keiner der Basisstationen verbunden sind, die zu der ausgefallenen Basisstation (BS) benachbart sind;
wobei jede der Basisstationen eine Softwarekomponente aufweist und die jeweilige Softwarekomponente die Bestimmung und lokale Speicherung der Liste der ihr zugehörigen Basisstation durchführt, wobei eine Kopie einer Liste einer ersten Basisstation von deren Softwarekomponente über ein Datennetzwerk zu einer Softwarekomponente einer zweiten Basisstation übertragen wird, wobei die von der Softwarekomponente der zweiten Basisstation empfangene Liste der ersten Basisstation von der Softwarekomponente der zweiten Basisstation lokal gespeichert wird, und wobei eine Kopie der Liste einer Basisstation von den Softwarekomponenten aller dieser Basisstation benachbarten Basisstationen jeweils lokal gespeichert wird.

2. Verfahren nach Anspruch 1, wobei vor dem Ausfall, eine Liste einer Basisstation in regelmäßigen Abständen aktualisiert worden ist.

3. Verfahren nach Anspruch 1 oder 2, wobei die gespeicherten Listen der Basisstationen jeweils von derselben Basisstation bestimmt und lokal gespeichert werden.

4. Verfahren nach Anspruch 1, wobei eine Liste einer Basisstation in regelmäßigen Abständen aktualisiert und neu übertragen wird.

5. Verfahren nach einem der vorhergehenden Ansprüche, wobei nach dem Ausfall der Basisstation (BS) eine Ausfallerkennungsnetzkomponente ein Kompensationsnetzwerk der Basisstationen, die mit der ausgefallenen Basisstation benachbart sind, aufbaut.

6. Verfahren nach einem der Ansprüche 1 bis 5, wobei nach dem Ausfall der Basisstation (BS) eine Ausfallerkennungsnetzkomponente eine Verbindung mit einer Softwarekomponente einer ausgewählten, der ausgefallenen Basisstation benachbarten, Basisstation aufbaut und diese darüber informiert, welche der Basisstationen des Mobilfunknetzes ausgefallen ist, wobei die ausgewählte Basisstation die erste in einem Kompensationsnetzwerk aufgenommene Basisstation darstellt.

7. Verfahren nach Anspruch 6, wobei eine im Kompensationsnetzwerk aufgenommene Basisstation ihre lokal gespeicherten Kopien der Listen der ihr benachbarten Basisstationen benutzt, um weitere der ausgefallenen Basisstation benachbarten Basisstationen in das Kompensationsnetzwerk aufzunehmen und diese darüber zu informieren, welche der Basisstationen des Mobilfunknetzes ausgefallen ist.

8. Verfahren nach einem der Ansprüche 5 bis 7, wobei die Auswertung einer der gespeicherten Listen nach Schritt a und b, von der Softwarekomponente einer ausgewählten im Kompensationsnetz aufgenommenen Basisstation durchgeführt wird.

9. Kompensationsverfahren zur Kompensation des Ausfalls der Basisstation (BS) des Mobilfunknetzes, wobei nach dem Verfahren einer der Ansprüche 5 bis 8 mindestens eine Mobilstation als eine vom Ausfall der Basisstation (BS) betroffene Mobilstation identifiziert worden ist, mit den Schritten:
A. Auswahl mindestens einer Kompensationsbasisstation, die eine der Basisstationen des Kompensationsnetzwerkes ist;
B. Ermittlung des aktuellen Zustands des Kompensationsnetzwerkes;
C. Änderung der Eigenschaften der mindestens einen Kompensationsbasisstation;
D. Ermittlung des aktuellen Zustands des Kompensationsnetzwerkes;
E. Vergleich des Zustands des Kompensationsnetzwerkes mit und ohne der Änderung der Eigenschaften der mindestens einen Kompensationsbasisstation und Beibehalten der Änderung wen ein Vergleichskriterium erfüllt ist;
F. Wiederholung der Schritte A-E oder C-E des Kompensationsverfahrens, bis das Kompensationsnetzwerk ein Abbruchkriterium erfüllt.

10. Kompensationsverfahren nach Anspruch 9, wobei die Schritte A bis F des Kompensationsverfahrens von einer Koordinationsbasisstation, die eine der Basisstationen des Kompensationsnetzwerkes ist, koordiniert wird.

11. Kompensationsverfahren nach einem der Ansprüche 9 bis 10, wobei die Ermittlung des aktuellen Zustands des Kompensationsnetzwerkes, die Identifizierung der vom Ausfall einer Basisstation (BS) eines Mobilfunknetzes betroffenen mindestens einen Mobilstation nach einem der Ansprüche 1 bis 8 aufweist.

12. Kompensationsverfahren nach Anspruch 11, wobei das Abbruchkriterium im Schritt F erfüllt ist, wenn keine vom Ausfall der Basisstation (BS) betroffene Mobilstation identifiziert wird.

13. Kompensationsverfahren nach einem der Ansprüche 9 bis 12, wobei die Ermittlung des aktuellen Zustands des Kompensationsnetzes eine Auswertung der Empfangsverhältnisse der mit den Basisstationen des Kompensationsnetzes verbundenen Mobilstationen aufweist.

14. Kompensationsverfahren nach einem der Ansprüche 9 bis 13, wobei das Vergleichskriterium, zum Vergleich des Zustands des Kompensationsnetzwerkes mit und ohne die Änderung der Eigenschaften der mindestens einen Kompensationsbasisstation, die Änderung der Anzahl der vom Ausfall der Basisstation (BS) betroffenen Mobilstationen berücksichtigt.

15. Kompensationsverfahren nach einem der Ansprüche 9 bis 14, wobei das Vergleichskriterium, zum Vergleich des Zustands des Kompensationsnetzwerkes mit und ohne die Änderung der Eigenschaften der mindestens einen Kompensationsbasisstation, die Verschlechterung der Empfangsverhältnisse der nicht vom Ausfall der Basisstation (BS) betroffenen Mobilstationen berücksichtigt.

16. Kompensationsverfahren nach Anspruch 9 bis 15, wobei das Vergleichskriterium die Auswirkung der Änderung der Eigenschaften der mindestens einen Kompensationsbasisstation auf ein Gütemaß bewertet, wobei das Gütemaß den Zustand des Kompensationsnetzwerkes bewertet und das Kompensationsverfahren das Gütemaß maximiert.

## Claims

1. Method for identifying the mobile stations affected by the failure of a base station (BS) of a mobile radio network, wherein a list with the mobile stations connected to the applicable base station and with the base stations adjacent to the applicable base station is defined and stored for each base station of the mobile radio network prior to the failure; having, after the failure of the base station (BS), the steps of:
a. evaluation of stored lists of the base stations of the mobile radio network for defining the base stations adjacent to the failed base station (BS);
b. evaluation of stored lists of the base stations of the mobile radio network for identifying the mobile stations that were connected to the base station (BS) prior to the failure of the same and that, after the failure of the base station (BS), are not connected to any of the base stations that are adjacent to the failed base station (BS);
wherein each of the base stations has a software component and the applicable software component carries out the definition and local storage of the list from the base station associated with it, wherein a copy of a list from a first base station is transmitted by its software component through a data network to a software component of a second base station, wherein the list from the first base station received by the software component of the second base station is locally stored by the software component of the second base station, and wherein a copy of the list from a base station is locally stored in each case by the software components of all the base stations adjacent to this base station.

2. Method according to claim 1, wherein a list from a base station has been updated at regular intervals.

3. Method according to claim 1 or 2, wherein each of the stored lists of the base stations are defined and locally stored by the same base station.

4. Method according to claim 1, wherein a list from a base station is updated and retransmitted at regular intervals.

5. Method according to any one of the preceding claims, wherein, after the failure of the base station (BS), a failure detection network component establishes a compensation network of the base stations that are adjacent to the failed base station.

6. Method according to any one of claims 1 through 5, wherein, after the failure of the base station (BS), a failure detection network component establishes a connection with a software component of a selected base station adjacent to the failed base station and informs said base station as to which base station of the mobile radio network has failed, wherein the selected base station represents the first base station incorporated in a compensation network.

7. Method according to claim 6, wherein a base station incorporated in the compensation network uses its locally stored copies of the lists from the base stations adjacent to it in order to incorporate in the compensation network additional base stations adjacent to the failed base station and to inform them as to which base station of the mobile radio network has failed.

8. Method according to any one of claims 5 through 7, wherein the evaluation of one of the stored lists according to steps a and b is carried out by the software component of a selected base station incorporated in the compensation network.

9. Compensation method for compensation of the failure of the base station (BS) of the mobile radio network, wherein at least one mobile station has been identified according to the method of any one of claims 5 through 8 as a mobile station affected by the failure of the base station (BS), having the steps:
A. selecting at least one compensation base station that is one of the base stations of the compensation network;
B. determining the current status of the compensation network;
C. changing the characteristics of the at least one compensation base station;
D. determining the current status of the compensation network;
E. comparing the status of the compensation network with and without the change in the characteristics of the at least one compensation base station and retaining the change if a comparison criterion is met;
F. repeating steps A-E or C-E of the compensation method until the compensation network meets a termination criterion.

10. Compensation method according to claim 9, wherein the steps A through F of the compensation method are coordinated by a coordination base station that is one of the base stations of the compensation network.

11. Compensation method according to any one of claims 9 through 10,
wherein the determination of the current status of the compensation network includes the identification of the at least one mobile station affected by the failure of a base station (BS) of a mobile radio network in accordance with any one of claims 1 through 8.

12. Compensation method according to claim 11, wherein the termination criterion in step F is fulfilled when there are no mobile stations identified as being affected by the failure of the base station (BS).

13. Compensation method according to any one of claims 9 through 12,
wherein the determination of the current status of the compensation network includes an evaluation of the reception conditions of the mobile stations connected to the base stations of the compensation network.

14. Compensation method according to any one of claims 9 through 13,
wherein the comparison criterion takes into account the change in the number of mobile stations affected by the failure of the base station (BS) for the purpose of comparing the status of the compensation network with and without the change in the characteristics of the at least one compensation base station.

15. Compensation method according to any one of claims 9 through 14,
wherein the comparison criterion takes into account the degradation of the reception conditions of the mobile stations that are not affected by the failure of the base station (BS) for the purpose of comparing the status of the compensation network with and without the change in the characteristics of the at least one compensation base station.

16. Compensation method according to claims 9 through 15, wherein the comparison criterion evaluates the effect of the change in the characteristics of the at least one compensation base station on a figure of merit, wherein the figure of merit evaluates the status of the compensation network and the compensation method maximizes the figure of merit.

## Revendications

1. Procédé d'identification des stations mobiles concernées par la défaillance d'une station de base (BS) d'un réseau de radiocommunication mobile, dans lequel, pour chaque station mobile du réseau de radiocommunication mobile, une liste des stations mobiles connectées à la station de base respective et des stations de base voisines de la station de base respective est déterminée et enregistrée avant la défaillance ; comprenant les étapes suivantes après la défaillance de la station de base (BS):
a. Analyse de listes enregistrées des stations de base du réseau de radiocommunication mobile pour déterminer les stations de base voisines de la station de base (BS) défaillante;
b. Analyse de listes enregistrées des stations de base du réseau de radiocommunication mobile pour identifier les stations mobiles qui avaient été connectées à la station de base (BS) avant la défaillance de celle-ci et qui, après la défaillance de la station de base (BS), ne sont connectées à aucune des stations de base voisines de la station de base (BS) défaillante ;
chacune des stations de base comportant un composant de logiciel et le composant de logiciel respectif réalisant la détermination et l'enregistrement local de la liste de la station de base qui lui est associée, une copie d'une liste d'une première station de base étant transmise, par le composant de logiciel de celle-ci, à un composant de logiciel d'une deuxième station de base via un réseau de données, la liste de la première station de base reçue par le composant de logiciel de la deuxième station de base étant enregistrée localement par le composant de logiciel de la deuxième station de base, et une copie de la liste d'une station de base étant respectivement enregistrée localement par les composants de logiciel de l'ensemble des stations de base voisines de ladite station de base.

2. Procédé selon la revendication 1, dans lequel, après la défaillance, une liste d'une station de base a été mise à jour à intervalles réguliers.

3. Procédé selon la revendication 1 ou 2, dans lequel les listes enregistrées des stations de base sont respectivement déterminées et enregistrées localement par la même station de base.

4. Procédé selon la revendication 1, dans lequel une liste d'une station de base est mise à jour et retransmise à intervalles réguliers.

5. Procédé selon l'une des revendications précédentes, dans lequel, après la défaillance de la station de base (BS), un élément de réseau pour la détection de défaillances établit un réseau de compensation des stations de base voisines de la station de base défaillante.

6. Procédé selon l'une des revendications 1 à 5, dans lequel, après la défaillance de la station de base (BS), un élément de réseau pour la détection de défaillances établit une liaison avec un composant de logiciel d'une station de base sélectionnée, voisine de la station de base défaillante, pour lui indiquer laquelle des stations de base du réseau de télécommunication mobile est défaillante, la station de base sélectionnée représentant la première station de base intégrée à un réseau de compensation.

7. Procédé selon la revendication 6, dans lequel une station de base intégrée au réseau de compensation utilise ses copies enregistrées localement des listes de ses stations de bases voisines pour intégrer d'autres stations de base voisines de la station de base défaillante au réseau de compensation et pour leur indiquer laquelle des stations de base du réseau de radiocommunication mobile est défaillante.

8. Procédé selon l'une des revendications 5 à 7, dans lequel l'analyse de l'une des listes enregistrées selon les étapes a et b est réalisée par le composant de logiciel d'une station base sélectionnée intégrée au réseau de compensation.

9. Procédé de compensation de la défaillance de la station de base (BS) du réseau de radiocommunication mobile, dans lequel au moins une station mobile a été identifiée comme étant une station mobile concernée par la défaillance de la station de base (BS) selon les revendications 5 à 8, comprenant les étapes :
A. Sélection d'au moins une station de base de compensation qui est l'une des stations de base du réseau de compensation;
B. Détermination de l'état actuel du réseau de compensation;
C. Modification des caractéristiques de la au moins une station de base de compensation;
D. Détermination de l'état actuel du réseau de compensation;
E. Comparaison de l'état du réseau de compensation avec et sans la modification des caractéristiques de la au moins une station de base de compensation et maintien de la modification si un critère de comparaison est rempli;
F. Répétition des étapes A-E ou C-E du procédé de compensation jusqu'à ce que le réseau de compensation remplisse un critère d'abandon.

10. Procédé de compensation selon la revendication 9, dans lequel les étapes A à F du procédé de compensation sont coordonnées par une station de base de coordination qui est l'une des stations de base du réseau de compensation.

11. Procédé de compensation selon l'une des revendications 9 à 10, dans lequel la détermination de l'état actuel du réseau de compensation comporte l'identification de la au moins une station mobile concernée par la défaillance d'une station de base (BS) d'un réseau de radiocommunication mobile selon l'une des revendications 1 à 8.

12. Procédé de compensation selon la revendication 11, dans lequel le critère d'abandon à l'étape F est rempli si aucune station mobile concernée par la défaillance de la station de base (BS) n'est identifiée.

13. Procédé de compensation selon l'une des revendications 9 à 12, dans lequel la détermination de l'état actuel du réseau de compensation comporte une analyse des conditions de réception des stations mobiles connectées aux stations de base du réseau de compensation.

14. Procédé de compensation selon l'une des revendications 9 à 13, dans lequel le critère de comparaison de l'état du réseau de compensation avec et sans la modification des caractéristiques de la au moins une station de base de compensation prend en compte la modification du nombre des stations mobiles concernées par la défaillance de la station de base (BS).

15. Procédé de compensation selon l'une des revendications 9 à 14, dans lequel le critère de comparaison de l'état du réseau de compensation avec et sans la modification des caractéristiques de la au moins une station de base de compensation prend en compte la détérioration des conditions de réception des stations mobiles non concernées par la défaillance de la station de base (BS).

16. Procédé de compensation selon la revendication 9 à 15, dans lequel le critère de comparaison évalue l'effet de la modification des caractéristiques de la au moins une station de base de compensation sur un indice de qualité, l'indice de qualité évaluant l'état du réseau de compensation et le réseau de compensation maximisant l'indice de qualité.
